(19) Europäisches Patentamt
European Patent Office
Office européen des brevets

(11) Publication number: 0 494 156 B1

(12) # EUROPEAN PATENT SPECIFICATION

(45) Date of publication of patent specification: 19.10.94

(51) Int. Cl.[5]: C08L 23/16, C08L 23/22, C08K 5/39

(21) Application number: 90912336.6

(22) Date of filing: 09.08.90

(86) International application number: PCT/US90/04473

(87) International publication number: WO 91/05012 (18.04.91 91/09)

(54) ROOF SHEETING AND FLASHING ELASTOMERIC COMPOSITION.

(30) Priority: 29.09.89 US 415002

(43) Date of publication of application: 15.07.92 Bulletin 92/29

(45) Publication of the grant of the patent: 19.10.94 Bulletin 94/42

(84) Designated Contracting States: AT BE CH DE DK ES FR GB IT LI LU NL SE

(56) References cited:
DE-A- 2 058 951
DE-B- 1 298 267
FR-A- 1 463 232

(73) Proprietor: UNIROYAL CHEMICAL COMPANY, Inc.
World Headquarters
Middlebury Connecticut 06749 (US)

(72) Inventor: CREPEAU, Allen, E.
113 Burr Rd.
Southbury, CT 06488 (US)
Inventor: JABLONOWSKI, Thomas, L.
132 Beacon Manor Circle
Naugatuck, CT 06770 (US)

(74) Representative: Browne, Robin Forsythe, Dr. et al
Urquhart-Dykes & Lord
Tower House
Merrion Way
Leeds LS2 8PA West Yorkshire (GB)

EP 0 494 156 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

The instant invention relates to an elastomeric composition selected from the group consisting of ethylene-propylene-non-conjugated diene terpolymer (EPDM), isobutylene-conjugated diene copolymer (butyl rubber) and mixtures of the terpolymer and copolymer. More particularly, the instant invention is directed to an elastomeric composition selected from the group consisting of ethylene-propylene-non-conjugated diene terpolymer, isobutylene-conjugated diene copolymer and mixtures of the terpolymer and copolymer which may be applied to a roof as roofing sheets or flashing members which, upon exposure to ambient influences, have the ability to cross-linked.

### BACKGROUND OF THE PRIOR ART

Elastomeric ethylene-propylene-non-conjugated diene terpolymer (EPDM) and isobutylene-conjugated diene copolymer (butyl rubber) compositions are well known in the art. The use of EPDM and butyl rubber compositions as the material of construction of roof sheeting is also known in the art. Such sheeting provided in the cured or cross-linked state provide excellent materials for use on a roof in those applications where flat material is acceptable for disposition on equally flat or moderately contoured roofing structures. However, when the cross-linked EPDM or butyl rubber sheeting of the prior art is disposed on intricately contoured surfaces of a roof, such as parapet, chimney, ventilator sections and the like, the flat cross-linked sheeting of the prior art is not acceptable. That is, cross-linked EPDM or butyl rubber lacks the formability to successfully and permanently follow, cover and retain irregular shaped contours.

Roofing material used to follow irregular contours is known as flashing. Cross-linked EPDM or butyl rubber roof sheeting is not normally used as flashing because gaps readily develop around the contours between the sheeting sections of the roof, and those other portions of the roof in which the EPDM or butyl rubber is employed as flashing.

Whereas cross-linked EPDM or butyl rubber sheeting have each established excellent reputations as effective barriers to roof leaks on the surfaces upon which they are applied, still, this protection has not been available to those portions of the roof which are characterized by their irregular shape. Thus, the excellent protection afforded by EPDM or butyl rubber compositions has not been available as flashing. This results in the inability to protect those sections of the roof characterized by irregular shape against leakage. The utilization of EPDM or butyl rubber roof sheeting, a most effective long term protector against water leakage, is seriously compromised by this defect in cured EPDM and butyl rubber.

It is the object of this invention to prepare improved accelerator-vulcanizer blends for use in ethylene-propylene-non-conjugated diene terpolymer (EPDM) roof sheeting which would allow EPDM sheet to cure in situ during roof service providing properties similar to conventional vulcanized roof membrane.

The use of EPDM compositions as the material of construction of roof sheeting is well known in the art. Also, EPDM compositions containing accelerator-vulcanizer blends for in situ curing of roof sheeting and flashing is known, e.g., U.S. patent 4,461,875 (A.E. Crepeau).

U.S. Patent 3,531,444 describes a vulcanizable composition comprising sulfur, zinc oxide, a sulfur vulcanizable hydrocarbon elastomer and a vulcanization accelerator composition comprising a combination of a bis (morpholinothiocarbonyl) sulfide and thiuramsulfide or a metal dithiocarbamate.

U.S. Patent 3,644,304 is directed to a vulcanizable composition containing a diene modified ethylene-propylene elastomer, copper 2-mercaptobenzothiazole and a thiuram sulfide or a metal dithiocarbamate.

The preparation of EPDM polymers having grafted thereon vulcanization accelerators and polymer blends with highly unsaturated diene rubbers that are cured using sulfur are disclosed in U.S. Patent 3,897,405.

Another reference of interest is US Patent 4012332 which discloses and accelerator composition for the vulcanisation of diene elastomers, comprising a benzothiazole sulfenamide, a thiuram sulfide and copper 2-mercaptobenzothiazole.

The lack of elasticity of uncured EPDM in addition to its favourable characteristics of excellent weatherability, low temperature flexibility and resistance to direct sunlight lends itself for use as roof flashing.

Once the uncured EPDM roof sheeting and flashing are installed, it is desired that the ambient cure takes place as soon as possible so as to develop desirable physical properties similar to vulcanised roof membrane.

Surprisingly, it has been found that certain dialkylthioureas as the primary accelerator in curative triblends show faster self-cure at ambient temperature than known blends containing dipentaethylenethiuram hexasulfide (DPTH) as the primary accelerator, as taught in US 4461875 and the related patents, US 4514442 and US 4666785.

DE-B-298267 relates to a process for vulcanisation of rubber but does not disclose a roofing composition which is curable at ambient temperatures.

In accordance with the instant invention, a composition is provided which comprises 100 parts of ethylene-propylene-non-conjugated diene terpolymer (EPDM); 0.1 to 3.0 parts of dialkylthiourea; and 0.4 to 5.0 parts of one or more sulfur donor curatives.

## DETAILED DESCRIPTION OF THE INVENTION

In an embodiment of this invention a roofing composition is provided in which the curing composition of this invention is incorporated. The roofing composition may be in the form of sheets of the desired dimensions, usually formed by calendering or extruding the sheet, then cutting the sheet to proper size and shape. The sheets may be cut for use as roof sheeting or flashing members.

When used as a roof covering, the composition of this invention may cover any roofing base material, such as wood, composition board, concrete, brick or metal. In many applications, insulating or vapor barrier layers may be first placed over the roof bottom prior to the disposition of the composition of this invention. It is emphasized, however, that such layers are not essential to the carrying out of this invention.

Another aspect of this invention is a method of protecting roofs from water leaks by disposition thereupon of the composition of this invention.

In another preferred embodiment the composition of this invention is employed as a water liner. In this application sheets of the composition are employed as a reservoir liner, a pond liner and the like.

The composition of this invention comprises an elastomer selected from the group consisting of ethylene-- propylene-non-conjugated diene terpolymer (EPDM), isobutylene-conjugated diene copolymer (butyl rubber) and a mixture of EPDM and/or butyl rubber. These EPDM and butyl rubbers generally have iodine numbers below 100. Optionally, a smaller proportion (less than 40%) of sulfur vulcanisable natural or synthetic elastomers having iodine numbers above 100 (ie SBR, BR, IR, NBR, MR) present with a critical compound of the thiourea class of accelerators. The alkylthio- ureas are the general type with the following materials being preferred compounds, N,N'-diethyl-thiourea, ethylene thiourea, dimethylthiourea, trimethylthiourea, tetraalkylthiourea Most preferred are ethylene thiourea and N,N'-diethylthiourea.

The second critical cure compound is sulfur, preferably in elemental form such as the commonly used rhombic crystalline form called rubber makers' sulfur or spider sulfur present at 0.4 to 50. parts, preferably at 1.0 to 2.0 parts. The third critical cure component is a cure accelerator of one of the following classes:

1. Thiazoles, representative materials are benzothiazyl disulfide, 2-mercaptobenzo-thiazole.
2. Thiuram monosulfides, thiuram disulfides. Among the thiuram mono- and disulfides, are included lower-alkyl, monocyclic or (lower-alkyl), aryl and cyclic alkylene thiuram sulfides representative materials include:
   - Tetramethylthiuram disulfide,
   - Tetramethylthiuram monosulfide,
   - Tetraethylthiuram disulfide,
   - Tetraburylthiuram monosulfide,
   - Diisopropylthiuram disulfide,
   - Phenylethylthiuram disulfide.

More than one of the cure accelerators may be utilized to optimize the desired blend of cured properties, and processing characteristics. This may also be desirable to accommodate their solubility limitations of each individual type of accelerator in EPDM or butyl rubber. Also the tendency of certain materials to bloom to the surface of the rubber part can be minimized by maintaining each material at a level well below the solubility limit in the base rubber elastomer.

To that end, a preferred embodiment of the invention utilizes a fourth component - a dithiocarbamate type accelerator, such as salts of dialkyldithiocarbamates, wherein the alkyl groups may have from 1 to 6 carbon atoms and the salts may be formed with bismuth, cadmium, copper, iron, lead, potassium, selenium, sodium, tellerium or zinc. Specific examples are:

Zinc dibutyl-dithiocarbamate, Zinc pentamethylene-dithiocarbamate, Bismuth dimethyl-dithiocarbamate, Nickel dibutyl-dithiocarbamate, Copper dimethyl-dithiocarbamate, Selenium diethyl-dithiocarbamate, Lead dimethyl-dithiocarbamate, Selenium dimethyl-dithiocarbamate, Tellurium dimethyl-dithiocarbamate,

Tellurium diethyl-dithiocarbamate, Cadmium diethyl-dithiocarbamate, Zinc dibenzyl-dithiocarbamate, Zinc diethyl-dithiocarbamate.

In one preferred embodiment EPDM is used as the elastomer in the composition of this invention. The EPDM used is a terpolymer of ethylene, one or more olefin monomer(s) having the general formula $H_2C=CHR$, where R is an alkyl group having from 1 to 7 carbon atoms. In a preferred embodiment this olefin is propylene. The EPDM also includes a non-conjugated diene which may be a $C_6$-$C_{12}$ linear of $C_9$-$C_{10}$ bridged ring hydrocarbon diene copolymerizable with the aforementioned monomers. The most commonly employed non-conjugated dienes in the terpolymer of this invention are 1,4-hexadiene, dicyclopentadiene and 5-ethylidene-2-norbornene.

In another preferred embodiment the elastomer of the composition of this invention is butyl rubber. The butyl rubber of this invention is isobutylene-conjugated diene copolymer comprising from 0.5 to 10% by weight of conjugat-ed diene. Among the dienes within the contemplation of this invention are 2-methyl-1, 3-butadiene; 1,3-butadiene; and 2,3-dimethylbutadiene-1,3. Of these 2-methyl-1,3-- butadiene is most preferred.

In yet another preferred embodiment the elastomer is a mixture of EPDM and butyl rubber, where the EPDM and butyl rubber has the meanings given in the above two paragraphs. There is no limitation on the relative amounts of the two constituents.

The relative ratios of the akylthourea to sulfur to thiazole or thiuram may vary widely. Generally a ratio range of 1.0:0.5 to 1:5:5, preferably 1:1:1 to 1:3:3, most preferably 1:1.5:1 to 1:2:2. The dithiocarbamate is preferably added at amounts approximately equal to the thiazole/thiuram component. If a thiazole and a thiuram are added the total amount is represented in the ratios above. It is within the contemplation of this invention that additional ingredients may be incorporated into the composition of this invention. Among the additives that can be present in this composition are processing oils, plasticizers and filler and reinforcing agents. Among the filler and reinforcing agents especially useful in the composition of this invention are carbon black, silicates, talc, clay and calcium carbonate.

Other ingredients such as activators (zinc oxide, stearic acid, zinc stearate), antidegradants, tackifiers, processing aids may all be considered to be a part of the thermosetting roofing composition of this invention if added. The term curable elastomer will always be presumed to contain a metal oxide such as zinc oxide normally with a fatty acid such as stearic acid or alternatively, with a metal stearate such as zinc stearate which combines the activating effects of the metal oxide and fatty acid.

The compounding of the composition of this invention may be accomplished by any suitable means including an internal mixer, a transfer mixer, and extruder or an open mill. Independent of the method of compounding the composition, the resulting composition has a cure rate which correlates with the development of cross-linking.

## EXAMPLES

The following examples are intended to further illustrate the invention and are not intended to limit the scope of the invention as claimed in any manner.

### Examples 1-3 and Comparative Experiment A

A master batch(1) concentrate was prepared by adding 60 parts by weight of EPDM to a type "B" laboratory Banbury[™] internal mixer set a 77 revolutions per minute. To this was added 65 parts by weight of carbon black (type N-650); 65 parts by weight of carbon black (type N-339); 65 parts by weight of extender oil (paraffinic petroleum oil, ASTM D2226 Type 104 B, Sunpar[™]2280, R.E. Carroll, Inc.); 30 parts by weight of plasticizer (polybutenes, Indopol[™]H300, Amoco Chemicals Corporation); 10 parts by weight of processing aid (polymer of mixed olefins, Betaprene[™]H-100, Reichhold Chemicals Inc.); 5 parts by weight of zinc oxide and 1 part by weight of stearic acid. To this was added 40 parts by weight of EPDM. Thus, the total EPDM constituent comprised 100 parts by weight of the composition. After the remaining EPDM was added, the ram was lowered. Mixing for one minute followed at which time the temperature reached 115°C. The ram was then raised, the ram and throat of the mixer were swept, and the ram was again lowered. Mixing continued for an additional 90 seconds at which time the compound temperature reached 138°C. The mixer was stopped, the ram was raised, and the master batch was dropped on a mill to cool.

Four compositions were prepared employing the above master batch. The EPDM uncured rubber, comprising 100 parts of the 336 parts by weight of master batch(1), included a blend of 60 parts of a terpolymer noted as "EPDM I." EPDM I is a terpolymer containing 51.9% ethylene, 39.1% propylene and 9.0% 5-ethylidene-2--norbornene, all percentages being by weight. EPDM I had a Mooney viscosity (ML-1 plus 4) at 125 ° C of 68. The remaining 40 parts by weight of EPDM was a terpolymer denoted as "EPDM II." EPDM II is a terpolymer containing 71.6% ethylene, 23.9% propylene and 4.5% 5-ethylidene--2-norbornene, said percentages based on the total weight of the terpolymer. EPDM II had a Mooney Viscosity (ML-1 plus 4) at 125 ° C of 77.

To master batch (1), on a mill, was added a constant amount of mercaptobenzothiazole (MBT), zinc 0,0--dibutylphosphorodithioate (ZDBP), zinc dimethyldithiocarbamate (ZMDC) and sulfur, the concentrations of which are summarized in Table I below.

Four samples, Samples A and Nos. 1-3, were prepared from these four compositions, whose preparation is described above. Each sample, as stated above, included 336 parts by weight of the master batch, comprising 100 parts by weight of EPDM, the exact constituency of which is recited above.

To the four samples were added 0.6 parts by weight of dipentaethylenethiuram hexasulfide (DPTH), tetramethylthiuram disulfide (TMTD), 4-morpholinyl-2--benzothioazole disulfide (MBS) and ethylene thiourea (ETU), respectively.

These samples were then banded on the back roll of a 20.32 x 40.64 cm mill at a preset temperature of 95 ° C (front roll) and 65 ° C (back roll). The nip between the rolls was adjusted to provide a 2.03 mm sheet, while maintaining about 2 cm rolling bank of compound. After 30 seconds, air free sheet was cut from the mill and dusted with mica for easier handling.

For testing purposes, six 7.62 x 15.24 cm samples were cut from the dusted sheet and hung in an air circulating oven. From both the unaged and aged samples Standard Dumbbell Die A were cut according to ASTM D-412. Tensile strength at break, measured in mega Pascals, and elongation at break, measured in percent, measurements were made using an Instron[™] tester Model LTD, and the measured results were calculated in accordance with ASTM D-412. All testing was carried out at 23 ° C.

In addition to strength testing, the curing characteristics of the samples were investigated using a Monsanto Rheometer[™], model MPV, at 3 ° arc, 15 Hz, square die. The curing characteristics are reported as the increase in torque, measured in Centi-Newton meters, between the minimum value and the value obtained after 60 minutes at 100 ° C.

The results of these tests, as shown in Table I, show the cure efficiency of ethylene-thiourea as the primary accelerator.

TABLE I

| Constituents, in parts by weight | | | | |
|---|---|---|---|---|
| Example or Comparative Experiment | A | 1 | 2 | 3 |
| Master Batch (1) | 336 | 336 | 336 | 336 |
| MBT | 0.6 | 0.6 | 0.6 | 0.6 |
| ZDBP | 1.5 | 1.5 | 1.5 | 1.5 |
| ZMDC | 0.6 | 0.6 | 0.6 | 0.6 |
| Sulfur | 1.5 | 1.5 | 1.5 | 1.5 |
| DPTH | 0.6 | - | - | - |
| TMTD | - | 0.6 | - | - |
| MBS | - | - | 0.6 | - |
| ETU | - | - | - | 0.6 |
| Physical Properties | | | | |
| Rheometer 100°C | | | | |
| Torque (60), cN.m | 73.4 | 18.1 | 52.0 | 125.4 |
| Unaged | | | | |
| 100% modulus, MPa | 0.7 | 0.6 | 0.6 | 0.6 |
| Tensile, MPa | 1.9 | 1.7 | 1.7 | 1.7 |
| Elongation, % | 850 | 860 | 860 | 830 |
| Aged* | | | | |
| 100% Modulus, MPa | 1.4 | 0.9 | 1.1 | 1.6 |
| Change, % | (+100) | (+50) | (+85) | (+165) |
| Tensile, MPa | 10.2 | 3.9 | 5.9 | 11.0 |
| Change, % | (+435) | (+130) | (+245) | (+545) |
| Elongation, % | 700 | 660 | 750 | 640 |
| Change, % | (-18) | (-23) | (-13) | (-23) |

* 7 days at 70°C in a circulating air oven.

## Examples 4-5 and Comparative Experiment B

An additional master batch (2) concentrate was prepared in accordance with the procedure enumerated in Example 1. However, blends of different EPDM's were employed. That is, the relative weight ratios of ethylene and propylene were the same as in Example 1, but lower molecular weight polymers were used. The uncured rubber, comprising 100 parts of the 336 parts by weight of master batch(2), included a blend of 50 parts of a terpolymer noted as "EPDM III" having a Mooney Viscosity (ML-1 plus 4) at 125 °C of 55. The remaining 50 parts by weight of EPDM denoted as "EPDM IV" had a Mooney Viscosity (ML-1 plus 4) at 125 °C of 50.

Four compositions, denoted as Samples B and Nos. 4-5 were prepared from master batch(2) in which the concentration of MBT, ZDBP, ZMDC and sulfur, were maintained at a constant level of 0.6, 1.5, 0.6 and 1.5 parts, respectively, by weight per 100 parts EPDM. These samples included additional accelerators within the contemplation of this invention. The concentration of these accelerators was maintained constant in all the compositions of this example.

Table II below summarizes and defines the four compositions produced. Diethylthiourea(DETU) is used in Examples 4-5. In addition, these samples were tested in accordance with the procedures set forth in Example 1.

TABLE II

| Constituents, in parts by weight | | | |
|---|---|---|---|
| Example or Comparative Experiment | B | 4 | 5 |
| Master Batch (2) | 336 | 336 | 336 |
| MBT | 0.6 | 0.6 | - |
| ZDBP | 1.5 | 1.5 | 1.5 |
| ZMDC | 0.6 | 0.6 | 0.6 |
| Sulfur | 1.5 | 1.5 | 1.5 |
| DPTH | 0.6 | - | - |
| DETU | - | 0.6 | 0.6 |
| Physical Properties | | | |
| Rheometer 100°C | | | |
| Torque (60), cN.m | 58.8 | 106.2 | 115.3 |
| Unaged | | | |
| 100% modulus, MPa | 0.38 | 0.41 | - |
| Tensile, MPa | 0.41 | 0.44 | 0.41 |
| Elongation, % | 1000+ | 1000+ | 1000+ |
| Aged* | | | |
| 100 Modulus, MPa | 0.97 | 1.66 | - |
| Change, % | (+155) | (+305) | - |
| Tensile, MPa | 4.62. | 8.69 | 9.72 |
| Change, % | (+1026) | (+1875) | (+2270) |
| Elongation, % | 650 | 570 | 560 |

* 7 days at 70°C in a circulating air oven.

Examples 6-8

Additional samples No. 6-8 were prepared using the same EPDM sheeting compounds as in Example 1 with the exception of the accelerators used. Along with ETU as a primary accelerator, the following secondary accelerators showed increasing cure rates in the following order: MBS, (1) ZMDC, (2) Tellurium diethyldithiocarbamate (TeEDC), and (3) TMTD. ZMDC, TeEDC and TMTD, all in blends with ETU, exhibit cure rates useful for ambient curing EPDM compounds.

A summary of the constituents of these compositions, Nos. 6-8 and the results of physical testing, as described in Example 1, employing these three samples, are tabulated in Table III.

TABLE III

| Example | 6 | 7 | 8 |
|---|---|---|---|
| Master Batch(1) | 336 | 336 | 336 |
| Sulfur | 1.5 | 1.5 | 1.5 |
| ETU | 1.0 | 1.0 | 1.0 |
| ZMDC | 1.0 | - | - |
| TMTD | - | 1.0 | - |
| Te EDC | - | - | 1.0 |
| Physical Properties | | | |
| Rheometer 100 °C | | | |
| Torque (60), cN.m | 37.3 | 68.3 | 44.1 |
| Unaged | | | |
| 100% modulus, MPa[1] | 0.6 | 0.6 | 0.6 |
| Tensile, MPa | 1.2 | 1.2 | 1.2 |
| Elongation, % | 850 | 850 | 850 |
| Aged* | | | |
| 100 Modulus, MPa | 1.0 | 1.7 | 1.3 |
| Change, % | +67 | +183 | +117 |
| Tensile, MPa | 3.2 | 9.3 | 6.8 |
| Change, % | +167 | +675 | +467 |
| Elongation, % | 480 | 650 | 670 |

(1) Masterbatch, not including sulfur or accelerator
* 7 days at 70 °C in a circulating air oven.

Examples 9-20 and Comparative Experiments C-J

Roof sheeting samples were prepared using the same EPDM Master Batch as in Example 1 to further evaluate thioureas versus DPTH in low temperature flashing cure systems. Table IV summarizes the composition of the roof sheeting samples of these examples, as well as the percent improvement in cure rate of the thioureas versus that of DPTH as measured by the increase in torque using a Monsanto Rheometer[™] as described in Example 1.

From the results of these tests it can be seen that even under mild aging conditions, 70 °C, that a composition within the contemplation of this invention surprisingly develops a state of cure superior to compositions having DPTH as the primary accelerator. All comparative examples (C-J) would be the prior art compounds disclosed in related U.S. Patents 4,461,875; 4,514,442 and 4,666,785 based on DPTH as a necessary critical component of an ambient cure roofing composition.

TABLE IV

Constituents, parts by weight

| Example or Comparative Experiment | C | 9 | D | 10 | E | 11 | 12 | 13 | F | 14 | 15 | 16 | G | 17 | H | 18 | I | 19 | J | 20 |
|---|---|---|---|---|---|---|---|---|---|---|---|---|---|---|---|---|---|---|---|---|
| Master Batch(1) | 336 | 336 | 336 | 336 | 336 | 336 | 336 | 336 | 336 | 336 | 336 | 336 | 336 | 336 | 336 | 336 | 336 | 336 | 336 | 336 |
| DPTH | 1 | - | 1 | - | 1 | - | - | - | 1 | - | - | - | 1 | - | 1 | - | 1 | - | 0.6 | - |
| ETU | - | 1 | - | 1 | - | 1 | - | - | - | 1 | - | - | - | 1 | - | 1 | - | 1 | - | 0.6 |
| DETU | - | - | - | - | - | - | 1 | - | - | - | 1 | - | - | - | - | - | - | - | - | - |
| DBTU | - | - | - | - | - | - | - | 1 | - | - | - | 1 | - | - | - | - | - | - | - | - |
| MBT | 1 | 1 | 1 | 1 | - | - | - | - | - | - | - | - | - | - | - | - | - | - | 0.6 | 0.6 |
| ZMDC | 1 | 1 | - | - | 1 | 1 | 1 | 1 | - | - | - | - | - | - | - | - | - | - | 0.6 | 0.6 |
| TMTD | - | - | 1 | 1 | 1 | 1 | 1 | 1 | 1 | 1 | 1 | 1 | 1 | 1 | - | - | 1 | 1 | - | - |
| ZDBP | - | - | - | - | - | - | - | - | 1 | 1 | 1 | 1 | - | - | 1 | 1 | - | - | 1.5 | 1.5 |
| TeEDC | - | - | - | - | - | - | - | - | - | - | - | - | 1 | 1 | 1 | 1 | - | - | - | - |
| Sulfur | 1.50 | 1.50 | 1.50 | 1.50 | 1.50 | 1.50 | 1.50 | 1.50 | 1.50 | 1.50 | 1.50 | 1.50 | 1.50 | 1.50 | 1.50 | 1.50 | 1.50 | 1.50 | 1.50 | 1.50 |
| Physical Properties | | | | | | | | | | | | | | | | | | | | |
| Torque (60), cN.m | 85.9 | 90.4 | 83.6 | 91.5 | 56.5 | 63.3 | 63.3 | 56.5 | 55.4 | 89.3 | 78.0 | 72.3 | 64.4 | 140.1 | 59.9 | 87.0 | 45.2 | 71.2 | 73.5 | 117.5 |
| Improvement,% | - | 5.2 | - | 9.4 | - | 12.0 | 12.0 | 0 | - | 61.2 | 40.8 | 30.5 | - | 117.5 | - | 45.2 | - | 57.5 | - | 59.3 |

## Examples 21-23 and Comparative Experiment K

Additional roof sheeting samples were prepared using the same EPDM Master Batch (1) as in Example I to show that even at the lower 0.5 part sulfur level, ETU still shows up better than the DPT

. Higher sulfur levels (1.0 and 1.5) further increase the torque change at low temperatures, as expected. These results appear below in Table V.

TABLE V

| Constituents, in parts by weight | | | | | |
|---|---|---|---|---|---|
| Example or Comparative Experiment | | K | 21 | 22 | 23 |
| Master Batch (1) | | 336 | 336 | 336 | 336 |
| DPTH | 1.0 | - | - | - | |
| ETU(1) | | - | 1.0 | 1.0 | 1.0 |
| TMTD | 1.0 | 1.0 | 1.0 | 1.0 | |
| Sulfur | | 0.5 | 0.5 | 1.0 | 1.5 |
| **Physical Properties** | | | | | |
| Rheometer 100°C | | | | | |
| Torque (60)2, cN.m | | 19.2 | 23.7 | 54.2 | 67.8 |

1 1.33 parts of END-75 (75% ETU/25% EPR).

2 Increase in torque between minimum and 60 minute values.

Another aspect of the invention relates to a method of curing a thermosetting rubber composition on a roof in ambient temperature conditions comprising:

(a) blending 100 parts of an elastomer selected from the group consisting of ethylene-propylene-nonconjugated diene terpolymer, butyl rubber and mixtures with and a curative system essentially free of hexasulfide compounds of the structural formula $[(CH_2)m\ NCS]_2S$ composed of: 0.1 to 3.0 parts of selected from the group consisting of N,N'-diethyl-thiourea, ethylene thiourea, dimethylethylthiourea, trimethylthiourea, and tetraalkylthiourea; 0.4 to 5.0 parts of sulfur;

and a cure activating amount of an activator of a metal oxide, fatty acid or metal stearate of a type useful in rubber curing; and 0.4 to 5.0 parts of one or more accelerators selected from the group consisting of thiazoles, thiruams, and dithiocarbamates, all parts by weight per one hundred parts by weight of said elastomer to form a curable composition; and

(b) exposing said curable composition on said roof to air heated above 70°C for a time sufficient to cure said curable composition.

Yet another aspect relates to a method of waterproofing a roof exposed to ambient air comprising the steps of

(a) applying cured rubber sheets to a majority of the roof;

(b) overlapping the cured rubber sheets with sheets of an uncured thermosetting rubber roofing composition having an EPDM or butyl rubber elastomer base and a curative system essentially free of hexasulfide compounds of the structural formula $[(CH_2)n\ NCS]_2S$ intimately mixed therein of 0.1 to 3.0 parts of an alkylthiourea selected from the group consisting of N,N'-diethyl-thiourea, ethylene thiourea, dimethylethylthiourea, trimethylthiourea, and tetraalkylthiourea; 0.4 to 5.0 parts of sulfur; 0.4 to 5.0 parts of one or more accelerators selected from the group consisting of thiazoles, thiruams, and dithiocarbamates, all parts by weight per one hundred parts by weight of elastomer base, and a cure activating amount of an activator of a metal oxide, fatty acid or metal stearate of a type useful in rubber curing; and
(c ) curing said thermosetting rubber roofing composition by exposure to said ambient conditions.

**Claims**

**1.** A roofing composition cured at ambient temperature on a roof comprising:
(a) 100 parts of an elastomer selected from the group consisting of ethylene-propylene-non-conjugated diene terpolymer, butyl rubber and mixtures thereof;
(b) 0.1 to 3.0 parts of an alkylthiourea selected from the group consisting of N,N'-diethyl-thiourea, ethylene thiourea, dimethylethylthiourea, trimethylthiourea, and tetraalkylthiourea;
(c) 0.4 to 5.0 parts of sulfur;
(d) 0.4 to 5.0 parts of one or more accelerators selected from the group consisting of thiazoles, thiruams, and dithiocarbamates, all parts by weight and components (b), (c) and (d) are parts per one hundred parts by weight of (a) said composition being essentially free of hexasulfide compounds of the structural formula $[(CH_2)n\ NCS]_2S$
(e) a cure activating amount of an activator of a metal oxide, fatty acid or metal stearate of a type useful in rubber curing.

**2.** A roofing composition in accordance with claim 1 wherein said component (d) comprises a first accelerator selected from the group consisting of thiazoles and thiurams and a second dialkyl dithiocarbamate accelerator.

**3.** A roofing composition in accordance with claim 2 wherein said first accelerator is tetramethylthiuram disulfide.

**4.** A roofing composition in accordance with claim 2 wherein said first accelerator is mercaptobenzothiazole.

**5.** A roofing composition in accordance with claim 2 wherein said second accelerator is a zinc dimethyldithiocarbamate.

**6.** A roofing composition in accordance with claim 2 wherein said second accelerator is tellurium diethyldithio carbamate.

**7.** A roofing composition in accordance with claim 1 wherein said sulfur is between 1.0 and 2.0 parts.

**8.** A roofing composition in accordance with claim 1 wherein said alkylthiourea is N,N diethylthiourea.

**9.** A roofing composition in accordance with claim 1 further comprising less than 40 parts of a highly unsaturated thermosetting rubber having an iodine number above 100.

**10.** A roofing composition in accordance with claim 1 wherein said elastomer is ethylene-propylene-non-conjugated diene terpolymer.

**11.** A roofing composition in accordance with claim 1 further comprising at least one processing oil.

**12.** A roofing composition in accordance with claim 1, further comprising at least one plasticizer.

**13.** A roofing composition in accordance with claim 1, further comprising at least one filler and reinforcing agent.

**14.** A roofing composition in accordance with claim 13 wherein said filler and reinforcing agent are selected from the group consisting of carbon black, silicates, talc, clay, calcium carbonate, and mixtures thereof.

**15.** A method of curing a thermosetting rubber composition on a roof in ambient temperature conditions comprising:
(a) blending 100 parts of an elastomer selected from the group consisting of ethylene-propylene-nonconjugated diene terpolymer, butyl rubber and mixtures with and a curative system

essentially free of hexasulfide compounds of the structural formula $[(CH_2)m\ NCS]_2S$ composed of: 0.1 to 3.0 parts of an alkylthiourea selected from the group consisting of N,N'-diethyl-thiourea, ethylene thiourea, dimethylethylthiourea, trimethylthiourea, and tetraalkylthiourea;
0.4 to 5.0 parts of sulfur;
a cure activating amount of an activator of a metal oxide, fatty acid or metal stearate of a type useful in rubber curing; and 0.4 to 5.0 parts of one or more accelerators selected from the group consisting of thiazoles, thiruams, and dithiocarbamates, all parts by weight per one hundred parts by weight of said elastomer to form a curable composition; and
(b) exposing said curable composition on said roof to air heated above 70°C for a time sufficient to cure said curable composition.

**16.** A method of waterproofing a roof exposed to ambient air comprising the steps of
(a) applying cured rubber sheets to a majority of the roof;
(b) overlapping the cured rubber sheets with sheets of an uncured thermosetting rubber roofing composition having an EPDM or butyl rubber elastomer base and a curative system essentially free of hexasulfide compounds of the structural formula $[(CH_2)n\ NCS]_2S$ intimately mixed therein of 0.1 to 3.0 parts of an alkylthiourea selected from the group consisting of N,N'-diethyl-thiourea, ethylene thiourea, dimethylethylthiourea, trimethylthiourea, and tetraalkylthiourea;
0.4 to 5.0 parts of sulfur; 0.4 to 5.0 parts of one or more accelerators selected from the group consisting of thiazoles, thiruams, and dithiocarbamates, all parts by weight per one hundred parts by weight of elastomer base and a cure activating amount of an activator of a metal oxide, fatty acid or metal stearate of a type useful in rubber curing; and
(c ) curing said thermosetting rubber roofing composition by exposure to said ambient conditions.

## Patentansprüche

**1.** Bedachungszusammensetzung, ausgehärtet bei Umgebungstemperatur auf einem Dach, umfassend:
(a) 100 Teile eines Elastomers, ausgewählt aus der Gruppe, bestehend aus einem Terpolymer aus Ethylen, Propylen und einem nichtkonjugierten Dien, Butylkautschuk und Mischungen daraus,
(b) 0,1 bis 3,0 Teile eines Alkylthioharnstoffes, ausgewählt aus der Gruppe, bestehend aus N,N'-Diethylthioharnstoff, Ethylenthioharnstoff, Dimethylethylthioharnstoff, Trimethylthioharnstoff und Tetraalkylthioharnstoff,
(c) 0,4 bis 5,0 Teile Schwefel,
(d) 0,4 bis 5,0 Teile eines oder mehrerer Beschleuniger, ausgewählt aus der Gruppe, bestehend aus Thiazolen, Thiuramen und Dithiocarbamaten, wobei alle Mengenangaben als Gewichtsteile gegeben sind, die Mengenangaben der Verbindungen (b), (c) und (d) als Gewichtsteile pro einhundert Gewichtsteile (a) gegeben sind und die Zusammensetzung im wesentlichen frei ist von Hexasulfidverbindungen der Strukturformel $[(CH_2)n\ NCS]_2S$, und
(e) eine härtungsaktivierende Menge eines Aktivators aus einem Metalloxid, einer Fettsäure oder einem Metallstearat eines in der Kautschukhärtung brauchbaren Typs.

**2.** Bedachungszusammensetzung nach Anspruch 1, worin die Verbindung (d) einen ersten Beschleuniger, ausgewählt aus der Gruppe, bestehend aus Thiazolen und Thiuramen, und einen zweiten Dialkyldithiocarbamatbeschleuniger umfaßt.

**3.** Bedachungszusammensetzung nach Anspruch 2, worin der erste Beschleuniger Tetramethylthiuramdisulfid ist.

**4.** Bedachungszusammensetzung nach Anspruch 2, worin der erste Beschleuniger Mercaptobenzothiazol ist.

**5.** Bedachungszusammensetzung nach Anspruch 2, worin der zweite Beschleuniger ein Zinkdimethyldithiocarbamat ist.

**6.** Bedachungszusammensetzung nach Anspruch 2, worin der zweite Beschleuniger Tellurdiethyldithiocarbamat ist.

7. Bedachungszusammensetzung nach Anspruch 1, worin die Schwefelmenge zwischen 1,0 und 2,0 Teilen beträgt.

8. Bedachungszusammensetzung nach Anspruch 1, worin der Alkylthioharnstoff N,N'-Diethylthioharnstoff ist.

9. Bedachungszusammensetzung nach Anspruch 1, weiter umfassend weniger als 40 Teile eines hochgradig ungesättigten, duroplastischen Kautschuks mit einer Iodzahl über 100.

10. Bedachungszusammensetzung nach Anspruch 1, worin das Elastomer ein Terpolymer aus Ethylen, Propylen und einem nichtkonjugierten Dien ist.

11. Bedachungszusammensetzung nach Anspruch 1, weiter umfassend mindestens ein Weichmacheröl.

12. Bedachungszusammensetzung nach Anspruch 1, weiter umfassend mindestens ein Plastifizierungsmittel.

13. Bedachungszusammensetzung nach Anspruch 1, weiter umfassend mindestens einen Füllstoff und Verstärkungsmittel.

14. Bedachungszusammensetzung nach Anspruch 13, worin der Füllstoff bzw. das Verstärkungsmittel aus der Gruppe ausgewählt ist, bestehend aus Ruß, Silikaten, Talk, Ton, Calciumcarbonat und Mischungen daraus.

15. Verfahren zum Anshärten einer duroplastischen Kautschukzusammensetzung auf einem Dach unter Umgebungstemperaturbedingungen, umfassend, daß:
(a) 100 Teile eines Elastomers, ausgewählt aus der Gruppe, bestehend aus einem Terpolymer aus Ethylen, Propylen und einem nichtkonjugierten Dien, einem Butylkautschuk und Mischungen daraus, und ein Härtungssystem, das im wesentlichen frei ist von Hexasulfibdverbindungen der Strukturformel $[CH_2)m\ NCS]_2S$ und zusammengesetzt ist aus 0,1 bis 3,0 Teilen eines Alkylthioharnstoffes, ausgewählt aus der Gruppe, bestehend aus N,N'-Diethylthioharnstoff, Ethylenthioharnstoff, Dimethylethylthioharnstoff, Trimethylthioharnstoff und Tetraalkylthioharnstoff, 0,4 bis 5,0 Teilen Schwefel, einer härtungsaktivierenden Menge eines Aktivators aus einem Metalloxid, einer Fettsäure oder einem Metallstearat eines in der Kautschukhärtung brauchbaren Typs und 0,4 bis 5,0 Teilen eines oder mehrerer Beschleuniger, ausgewählt aus der Gruppe, bestehend aus Thiazolen, Thiuramen und Dithiocarbamaten, wobei alle Gewichtsteile auf einhundert Gewichtsteile des Elastomers bezogen sind, wodurch eine härtbare Zusammensetzung geformt wurde, und
(b) die härtbare Zusammensetzung auf dem Dach Luft, die auf etwa 70 °C aufgeheizt ist, ausgesetzt wird, und zwar für einen Zeitraum, der ausreicht, um die härtbare Zusammensetzung auszuhärten.

16. Verfahren zum Abdichten eines Daches, das der umgebenden Luft ausgesetzt ist, gegen Wasser, umfassend die Schritte, daß:
(a) ausgehärtete Kautschukbahnstücke auf den Hauptteil des Daches aufgebracht werden,
(b) die ausgehärteten Kautschukbahnstücke mit Bahnstücken aus einer unausgehärteten, duroplastischen Kautschukbedachungszusammensetzung überlappt werden, die eine Elastomergrundlage aus EPDM oder Butylkautschuk und ein Härtungssystem besitzt, das im wesentlichen frei ist von Hexasulfidverbindungen der Strukturformel $[CH_2)m\ NCS]_2S$ und intensiv zusammengemischt ist aus 0,1 bis 3,0 Teilen eines Alkylthioharnstoffs, ausgewählt aus der Gruppe, bestehend aus N,N'-Diethylthioharnstoff, Ethylenthioharnstoff, Dimethylethylthioharnstoff, Trimethylthioharnstoff und Tetraalkylthioharnstoff, 0,4 bis 5,0 Teilen Schwefel, 0,4 bis 5,0 Teilen eines oder mehrerer Beschleuniger, ausgewählt aus der Gruppe, bestehend aus Thiazolen, Thiuramen und Dithiocarbamaten, wobei alle Gewichtsteile auf einhundert Gewichtsteile der Elastomergrundlage bezogen sind, und einer härtungsaktivierenden Menge eines Aktivators aus einem Metalloxid, einer Fettsäure oder einem Metallstearat eines in der Kautschukhärtung brauchbaren Typs, und
(c) die duroplastische Kautschukbedachungszusammensetzung durch Einwirken der Umgebungsbedingungen gehärtet wird.

## Revendications

**1.** Composition pour toiture durcie à température ambiante sur un toit, comprenant :
(a) 100 parties d'un élastomère choisi dans le groupe consistant en un terpolymère d'éthylène-propylène-diène non conjugué, du caoutchouc butyle et leurs mélanges;
(b) 0,1 à 3,0 parties d'une alkylthiourée choisie dans le groupe consistant en N,N'-diéthyl-thiourée, éthylène thiourée, diméthyléthylthiuourée, triméthylthiourée, et tétraalkylthiourée;
(c) 0,4 à 5,0 parties de soufre;
(d) 0,4 à 5,0 parties d'un ou plusieurs accélérateurs choisis dans le groupe consistant en thiazoles, thiurames et dithiocarbamates, toutes les parties étant en poids et les composants (b), (c) et (d) étant des parties pour cent parties en poids de (a), ladite composition étant essentiellement exempte de composés d'hexasulfure de la formule de structure $[(CH_2)n\ NCS]_2S$
(e) une quantité activant le durcissement d'un activateur d'un oxyde de métal, d'un acide gras ou d'un stéarate de métal d'un type utile dans le durcissement du caoutchouc.

**2.** Composition pour toiture selon la revendication 1, où ledit composant (d) compend un premier accélérateur choisi dans le groupe consistant en thiazoles et thiurames et un second accélérateur de dialkyl dithiocarbamate.

**3.** Composition pour toiture selon la revendication 2, où ledit premier accélérateur est le disulfure de tétraméthylthiurame.

**4.** Composition pour toiture selon la revendication 2, où ledit premier accélérateur est le mercaptobenzo-thiazole.

**5.** Composition pour toiture selon la revendication 2, où ledit second accélérateur est un diméthyldithiocarbamate de zinc.

**6.** Composition pour toiture selon la revendication 2, où ledit second accélérateur est le diéthyldithio carbamate de tellure.

**7.** Composition pour toiture selon la revendication 1, où ledit soufre est présent à raison de 1,0 à 2,0 parties.

**8.** Composition pour toiture selon la revendication 1, où ledit alkylthiourée est la N,N-diéthylthiourée.

**9.** Composition pour toiture selon la revendication 1, contenant de plus moins de 40 parties d'un caoutchouc thermodurcissable très insaturé ayant un indice d'iode supérieur à 100.

**10.** Composition pour toiture selon la revendication 1, où ledit élastomère est un terpolymère d'éthylène-propylène-diène non conjugué.

**11.** Composition pour toiture selon la revendication 1, contenant de plus au moins une huile de traitement.

**12.** Composition pour toiture selon la revendication 1, contenant de plus au moins un agent plastifiant.

**13.** Composition pour toiture selon la revendication 1, contenant de plus au moins une charge et un agent de renforcement.

**14.** Composition pour toiture selon la revendication 13, où ladite charge et ledit agent de renforcement sont choisis dans le groupe consistant en noir de carbone, silicates, talc, argile, carbonate de calcium, et leurs mélanges.

**15.** Méthode de durcissement d'une composition de caoutchouc thermodurcissable sur un toit en conditions de température ambiantes, comprenant :
(a) le mélange de 100 parties d'un élastomère choisi dans le groupe consistant en un terpolymèe d'éthylène-propylène-diène non conjugué, un caoutchouc butyle et leurs mélanges avec un système durcisseur essentiellement exempt de composés d'hexasulfure de la formule de structure $[(CH_2)m$

$NCS]_2S$ composé de 0,1 à 3,0 parties d'une alkylthiourée choisie dans le groupe consistant en N,N'-diéthyl-thiourée, éthylène thiourée, diméthyléthylthiourée, triméthylthiourée et tétraalkylthiourée;

0,4 à 5,0 parties de soufre;

une quantité activant le durcissement d'un acivateur d'un oxyde de métal, d'un acide gras ou d'un stéarate de métal d'un type utile dans le durcissement du caoutchouc; et 0,4 à 5,0 parties d'un ou plusieurs accélérateurs choisis dans le groupe consistant en thiazoles, thiurames et dithiocarbamates, toutes les parties étant en poids pour cent parties en poids dudit élastomère, afin de former une composition durcissable; et

(b) l'exposition de ladite composition durcissable sur ledit toit à de l'air chauffé au-delà de 70 °C pendant un temps suffisant pour durcir ladite composition durcissable.

**16.** Méthode d'imperméabilisation d'un toit exposé à l'air ambiant, comprenant les étapes de :

(a) Appliquer des plaques de caoutchouc durci à une majorité du toit;

(b) recouvrir les plaques de caoutchouc durci de plaques d'une composition pour toiture d'un caoutchouc thermodurcissant non durci ayant une base d'élastomère de EPDM ou de caoutchouc butyle et un système durcisseur essentiellement exempt de composés d'hexasulfure de la formule de structure $[(CH_2)n\ NCS]_2S$, en mélange intime avec 0,1 à 3,0 parties d'une alkylthiourée choisie dans le groupe consistant en N,N'-diéthyl-thiourée, éthylène thiourée, diméthyléthylthiourée, triméthylthiourée et tétraalkylthiourée; 0,4 à 5,0 parties de soufre; 0,4 à 5,0 parties d'un ou plusieurs accélérateurs choisis dans le groupe consistant en thiazoles, thiurames et dithiocarbamates, toutes les parties étant en poids pour cent parties en poids de la base d'élastomère et d'une quantité activant le durcissement d'un activateur d'un oxyde de métal, d'un acide gras ou d'un stéarate de métal d'un type utile dans le durcissement du caoutchouc; et

(c) durcir ladite composition pour toiture de caoutchouc thermodurcissable par exposition auxdites conditions ambiantes.